# EUROPEAN PATENT SPECIFICATION

(11) **EP 3 473 842 B1**
(45) Date of publication and mention of the grant of the patent: **30.11.2022**
(21) Application number: 18200988.6
(22) Date of filing: 17.10.2018
(51) Int. Cl.: F02K 3/10, F02C 7/236, F02C 9/28

(54) **ELECTRIC CRUISE PUMP SYSTEM**
ELEKTRISCHES REISEFLUGPUMPENSYSTEM
SYSTÈME DE POMPE ÉLECTRIQUE DE RÉGIME DE CROISIÈRE

(30) Priority: 17.10.2017 US 201715785717
(43) Date of publication of application: 24.04.2019
(73) Proprietor: Hamilton Sundstrand Corporation, Charlotte, NC 28217 (US)
(72) Inventor: O'RORKE, Morgan, West Hartford, CT 06119 (US); RAMOS, Erick, South Windsor, CT 06074 (US); STOICESCU, Adrian L., Roscoe, IL 61073 (US)
(74) Representative: Dehns

(56) References cited:
- RU-C1- 2 507 406
- US-A1- 2010 089 025
- US-A1- 2017 167 387

## Description

### BACKGROUND

This application relates to a fuel supply system for use on gas turbine engines on military aircraft applications.

Gas turbine engines are known and typically include a compressor compressing air and delivering it into a combustor. The air is mixed with fuel and ignited in the combustor and products of the combustion pass downstream over turbine rotors, driving them to rotate.

In military applications, gas turbine engines are also provided with an augmentor. An augmentor is typically positioned downstream of the turbine exhaust and receives additional fuel to provide additional combustion to achieve propulsion and very high speed operation.

Modern military jet engines face thermal management concerns. Fuel temperatures are increasing.

Of course, the pumping systems for the fuel supply must be sufficient to meet the greatest demand. For that reason, relatively large pumps have been utilized. At lower demand operation, which is the bulk of the time the aircraft is in operation, the pumped fuel is returned to a fuel tank downstream of the pump. This increases the temperature of the fuel.

RU 2 507 406 C1 discloses a fuel supply system for a gas turbine engine according to the preamble of claim 1.

### SUMMARY

The present invention provides a fuel supply system for a gas turbine engine as set forth in claim 1.

A gas turbine engine and a method are also disclosed.

These and other features may be best understood from the following drawings and specification.

### BRIEF DESCRIPTION OF THE DRAWINGS

Figure 1 schematically shows a gas turbine engine.
Figure 2 schematically shows a fuel supply system for the engine of Figure 1.

### DETAILED DESCRIPTION

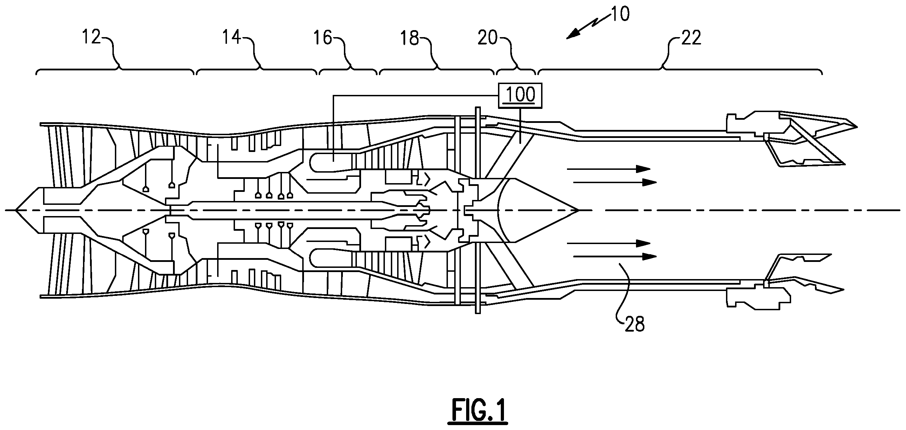

Referring to Figure 1, a gas turbine engine 10 includes a fan section 12, a compressor section 14, a combustor section 16, and a turbine section 18. Air entering into the fan section 12 is initially compressed and fed to the compressor section 14. In the compressor section 14, the incoming air from the fan section 12 is further compressed and communicated to the combustor section 16. In the combustor section 16, the compressed air is mixed with gas and ignited to generate a hot exhaust stream 28. The hot exhaust stream 28 is expanded through the turbine section 18 to drive the fan section 12 and the compressor section 14.

The gas turbine engine 10 includes an augmenter section 20 where additional fuel can be mixed with the exhaust gasses 28 and ignited to generate additional thrust. The exhaust gasses 28 flow from the turbine section 18 and the augmenter section 20 through an exhaust liner assembly 22. A fuel supply system 100 is shown to deliver fuel to the combustor section 16 and augmentor 20.

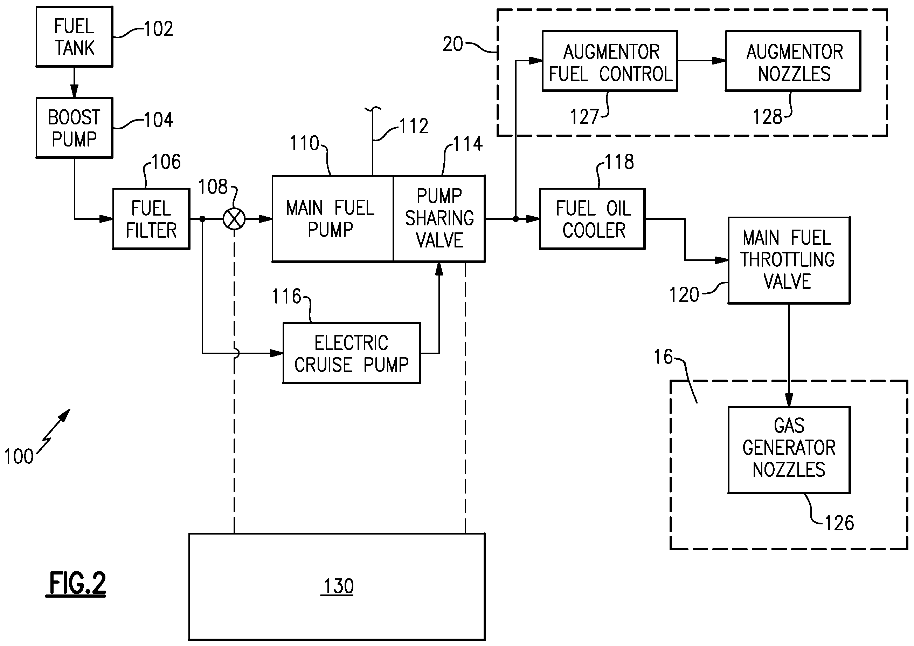

Figure 2 shows a fuel supply system 100 for the engine shown in Figure 1. A fuel tank 102 communicates with a boost pump 104, which supplies fuel through a fuel filter 106. A valve 108 downstream of the fuel filter 106 can supply fuel to a main fuel pump 110. Main fuel pump 110 is shown schematically at being driven by a shaft 112, which may be driven by the turbine section 18 of the gas turbine engine 10 illustrated in Figure 1.

The valve 108 is opened or closed to allow the flow of fuel to the main fuel pump 110. Main fuel pump 110 may be a "run dry" pump, which means that it will continue to run even if fuel is blocked by the valve 108.

The main fuel pump 110 may be a centrifugal pump.

Fuel is also delivered to an electric cruise pump 116. A pump sharing valve 114 combines the flow from the pumps 116 and 110 and supplies it downstream to a fuel oil cooler 118, a main fuel throttling valve 120, and into the gas turbine combustor section 16 and its nozzles 126.

Fuel is also delivered to an augmentor fuel control 127 and to augmentor nozzles 128, selectively in augmentor section 20.

The sharing valve 114 delivers fuel only from the electric pump 116 at certain lower demand operation.

A controller 130 controls the valve 108 and the sharing valve 114.

During the bulk of the operation of the engine 10, the fuel supply needs can be met by the electric cruise pump 116. Thus, valve 108 is closed and sharing valve 114 delivers fuel only from electric cruise pump 116. At times when there is greater need for fuels, such as at takeoff, perhaps climb, and in military maneuvering, the pump 110 can supplement the flow from the pump 116. Generally at the times when electric cruise pump 116 is delivering fuel on its own, there is no fuel being delivered to said augmentor section 20.

As the shutoff valve 108 opens and the main fuel pump 110 begins to produce flow, the pump sharing valve 114 may begin to shift the supply of flow from the electric cruise pump 116 to pump 110. As the flow required from pump 116 decreases, its speed may be reduced to minimize power extraction until the pump 116 is spinning at a minimum speed.

A method of operating a gas turbine engine includes the steps of providing a main fuel pump to deliver fuel from a fuel tank, and providing an electric pump to deliver fuel from the fuel tank. The main fuel pump and the electric pump both deliver fuel to a sharing valve. The sharing valve selectively delivers fuel downstream into a gas generator portion of a gas turbine engine and to an augmentor. The sharing valve is controlled such that fuel flows from the main fuel pump to the augmentor and to the gas generator at higher demand operation, and does not flow from the main fuel pump at lower demand operation.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A fuel supply system (100) for a gas turbine engine (10) comprising:
a fuel tank (102);
a main fuel pump (110) for receiving fuel from said fuel tank (102);
an electric pump (116) for receiving fuel from said fuel tank (102), wherein said main fuel pump (110) and said electric pump (116) both deliver fuel to a sharing valve (114), and said sharing valve (114) is configured to selectively deliver fuel downstream into a gas generator portion of a gas turbine engine (10) and to an augmentor (20); and
a controller (130) programmed to control said sharing valve (114) such that fuel can flow from said main fuel pump (110) to the augmentor (20) and the gas generator at higher demand operation, and cannot flow from said main fuel pump (110) at lower demand operation, **characterised in that**:
said main fuel pump (110) and said electric pump (116) are configured to both supply fuel to said augmentor (20) and to said gas generator during higher demand operation.

2. A gas turbine engine (10) comprising:
a gas generator including a compressor (14), a combustor section (16) and a turbine section (18);
an augmentor section (20); and
the fuel supply system (100) of claim 1.

3. A method of operating a gas turbine engine (10) comprising:
providing a main fuel pump (110) to deliver fuel from a fuel tank (102);
providing an electric pump (116) to deliver fuel from said fuel tank (102), said main fuel pump (110) and said electric pump (116) both delivering fuel to a sharing valve (114), said sharing valve (114) selectively delivering fuel downstream into a gas generator portion of said gas turbine engine (10) and to an augmentor (20); and
controlling said sharing valve (114) such that fuel flows from said main fuel pump (110) to said augmentor (20) and to said gas generator at higher demand operation, and does not flow from said main fuel pump (110) at lower demand operation, **characterised in that**:
said main fuel pump (110) and said electric pump (116) both supply fuel to said augmentor (20) and to said gas generator during higher demand operation.

4. The fuel supply system (100), gas turbine engine (10) or method as set forth in any of claims 1 to 3, wherein a main fuel valve (108) selectively blocks the flow of fuel to said main fuel pump (110) during lower demand operation.

5. The fuel supply system (100), gas turbine engine (10) or method as set forth in any preceding claim, wherein fuel for said augmentor (20) passes through an augmentor fuel control (127).

6. The fuel supply system (100), gas turbine engine (10) or method as set forth in claim 5, wherein said augmentor fuel control (127) is configured to selectively block flow.

7. The fuel supply system (100), gas turbine engine (10) or method as set forth in any preceding claim, wherein fuel from said fuel tank (102) is driven by a boost pump (104) to said main fuel pump (110) and said electric pump (116).

8. The gas turbine engine (10) or method as set forth in any of claims 2 to 7, wherein fuel is not delivered to said augmentor (20) during lower demand operation.

9. The fuel supply system (100), gas turbine engine (10) or method as set forth in any preceding claim, wherein said sharing valve (114) delivers fuel only from said electric pump (116) at lower demand operation.

10. The fuel supply system (100), gas turbine engine (10) or method as set forth in any preceding claim, wherein a valve (108) selectively blocks the flow of fuel to said main fuel pump (110) during said lower demand operation.

## Patentansprüche

1. Treibstoffzufuhrsystem (100) für ein Gasturbinentriebwerk (10), umfassend:
einen Treibstofftank (102);
eine Haupt-Treibstoffpumpe (110) zum Aufnehmen von Treibstoff aus dem Treibstofftank (102);
eine elektrische Pumpe (116) zum Aufnehmen von Treibstoff aus dem Treibstofftank (102), wobei die Haupt-Treibstoffpumpe (110) und die elektrische Pumpe (116) beide Treibstoff zu einem Verteilungsventil (114) fördern und das Verteilungsventil (114) so konfiguriert ist, dass es Treibstoff stromabwärts wahlweise in einen Gasgeneratorabschnitt eines Gasturbinentriebwerks (10) und zu einem Schubverstärker (20) liefert; und
eine Steuerung (130), die dazu programmiert ist, das Verteilungsventil (114) derart zu steuern, dass bei einem Betrieb mit höherem Bedarf Treibstoff von der Haupt-Treibstoffpumpe (110) zu dem Schubverstärker (20) und dem Gasgenerator strömen kann und bei einem Betrieb mit niedrigerem Bedarf kein Treibstoff von der Haupt-Treibstoffpumpe (110) strömen kann, **dadurch gekennzeichnet, dass**
die Haupt-Treibstoffpumpe (110) und die elektrische Pumpe (116) so konfiguriert sind, dass sie während eines Betriebs mit höherem Bedarf sowohl dem Schubverstärker (20) als auch dem Gasgenerator Treibstoff zuführen.

2. Gasturbinentriebwerk (10), umfassend:
einen Gasgenerator mit einem Verdichter (14), einem Brennkammerabschnitt (16) und einem Turbinenabschnitt (18);
einen Schubverstärkerabschnitt (20) und
das Treibstoffzufuhrsystem (100) nach Anspruch 1.

3. Verfahren zum Betreiben eines Gasturbinentriebwerks (10), umfassend:
Bereitstellen einer Haupt-Treibstoffpumpe (110), um Treibstoff aus einem Treibstofftank (102) zu fördern;
Bereitstellen einer elektrischen Pumpe (116), um Treibstoff aus dem Treibstofftank (102) zu fördern, wobei die Haupt-Treibstoffpumpe (110) und die elektrische Pumpe (116) beide Treibstoff zu einem Verteilungsventil (114) fördern, wobei das Verteilungsventil (114) Treibstoff stromabwärts wahlweise in einen Gasgeneratorabschnitt des Gasturbinentriebwerks (10) und zu einem Schubverstärker (20) liefert; und
Steuern des Verteilungsventils (114) derart, dass bei einem Betrieb mit höherem Bedarf Treibstoff von der Haupt-Treibstoffpumpe (110) zu dem Schubverstärker (20) und zu dem Gasgenerator strömt und bei einem Betrieb mit niedrigerem Bedarf kein Treibstoff von der Haupt-Treibstoffpumpe (110) strömt, **dadurch gekennzeichnet, dass**
während eines Betriebs mit höherem Bedarf beide, die Haupt-Treibstoffpumpe (110) und die elektrische Pumpe (116), dem Schubverstärker (20) und dem Gasgenerator Treibstoff zuführen.

4. Treibstoffzufuhrsystem (100), Gasturbinentriebwerk (10) oder Verfahren nach einem der Ansprüche 1 bis 3, wobei während eines Betriebs mit niedrigerem Bedarf ein Haupt-Treibstoffventil (108) wahlweise den Zustrom des Treibstoffs zu der Haupt-Treibstoffpumpe (110) blockiert.

5. Treibstoffzufuhrsystem (100), Gasturbinentriebwerk (10) oder Verfahren nach einem der vorhergehenden Ansprüche, wobei Treibstoff für den Schubverstärker (20) durch einen Schubverstärker-Treibstoffregler (127) strömt.

6. Treibstoffzufuhrsystem (100), Gasturbinentriebwerk (10) oder Verfahren nach Anspruch 5, wobei der Schubverstärker-Treibstoffregler (127) so konfiguriert ist, dass er wahlweise den Zustrom blockiert.

7. Treibstoffzufuhrsystem (100), Gasturbinentriebwerk (10) oder Verfahren nach einem der vorhergehenden Ansprüche, wobei Treibstoff aus dem Treibstofftank (102) durch eine Zusatzpumpe (104) zu der Haupt-Treibstoffpumpe (110) und der elektrischen Pumpe (116) getrieben wird.

8. Gasturbinentriebwerk (10) oder Verfahren nach einem der Ansprüche 2 bis 7, wobei dem Schubverstärker (20) während eines Betriebs mit niedrigerem Bedarf kein Treibstoff zugeführt wird.

9. Treibstoffzufuhrsystem (100), Gasturbinentriebwerk (10) oder Verfahren nach einem der vorhergehenden Ansprüche, wobei das Verteilungsventil (114) bei einem Betrieb mit niedrigerem Bedarf Treibstoff nur von der elektrischen Pumpe (116) liefert.

10. Treibstoffzufuhrsystem (100), Gasturbinentriebwerk (10) oder Verfahren nach einem der vorhergehenden Ansprüche, wobei während eines Betriebs mit niedrigerem Bedarf ein Ventil (108) wahlweise den Zustrom des Treibstoffs zu der Haupt-Treibstoffpumpe (110) blockiert.

## Revendications

1. Système d'alimentation en carburant (100) pour un moteur à turbine à gaz (10) comprenant :
un réservoir de carburant (102) ;
une pompe à carburant principale (110) pour recevoir du carburant depuis ledit réservoir de carburant (102) ;
une pompe électrique (116) pour recevoir du carburant depuis ledit réservoir de carburant (102), dans lequel ladite pompe à carburant principale (110) et ladite pompe électrique (116) fournissent toutes deux du carburant à une soupape de répartition (114), et ladite soupape de répartition (114) est configurée pour fournir sélectivement du carburant en aval dans une partie de générateur de gaz d'un moteur à turbine à gaz (10) et vers un augmentateur (20) ; et
un dispositif de commande (130) programmé pour commander ladite soupape de répartition (114) de sorte que du carburant peut s'écouler depuis ladite pompe à carburant principale (110) vers l'augmentateur (20) et le générateur de gaz lors d'un fonctionnement à demande plus élevée, et ne peut pas s'écouler depuis ladite pompe à carburant principale (110) lors d'un fonctionnement à demande plus faible, **caractérisé en ce que** : ladite pompe à carburant principale (110) et ladite pompe électrique (116) sont configurées pour fournir à la fois du carburant audit augmentateur (20) et audit générateur de gaz pendant un fonctionnement à demande plus élevée.

2. Moteur à turbine à gaz (10) comprenant :
un générateur de gaz comportant un compresseur (14), une section de chambre de combustion (16) et une section de turbine (18) ;
une section d'augmentateur (20) ; et
le système d'alimentation en carburant (100) selon la revendication 1.

3. Procédé de fonctionnement d'un moteur à turbine à gaz (10) comprenant :
la fourniture d'une pompe à carburant principale (110) pour fournir du carburant depuis un réservoir de carburant (102) ;
la fourniture d'une pompe électrique (116) pour fournir du carburant depuis ledit réservoir de carburant (102), ladite pompe à carburant principale (110) et ladite pompe électrique (116) fournissant toutes deux du carburant à une soupape de répartition (114), ladite soupape de répartition (114) fournissant sélectivement du carburant en aval dans une partie de générateur de gaz dudit moteur à turbine à gaz (10) et vers un augmentateur (20) ; et
la commande de ladite soupape de répartition (114) de sorte que du carburant s'écoule depuis ladite pompe à carburant principale (110) vers ledit augmentateur (20) et vers ledit générateur de gaz lors d'un fonctionnement à demande plus élevée, et ne s'écoule pas depuis ladite pompe à carburant principale (110) lors d'un fonctionnement à demande plus faible, **caractérisé en ce que** :
ladite pompe à carburant principale (110) et ladite pompe électrique (116) fournissent toutes deux du carburant audit augmentateur (20) et audit générateur de gaz pendant un fonctionnement à demande plus élevée.

4. Système d'alimentation en carburant (100), moteur à turbine à gaz (10) ou procédé selon l'une quelconque des revendications 1 à 3, dans lequel une soupape de carburant principale (108) bloque sélectivement l'écoulement de carburant vers ladite pompe à carburant principale (110) pendant un fonctionnement à demande plus faible.

5. Système d'alimentation en carburant (100), moteur à turbine à gaz (10) ou procédé selon une quelconque revendication précédente, dans lequel du carburant pour ledit augmentateur (20) passe par une commande de carburant d'augmentateur (127).

6. Système d'alimentation en carburant (100), moteur à turbine à gaz (10) ou procédé selon la revendication 5, dans lequel ladite commande de carburant d'augmentateur (127) est configurée pour bloquer sélectivement l'écoulement.

7. Système d'alimentation en carburant (100), moteur à turbine à gaz (10) ou procédé selon une quelconque revendication précédente, dans lequel du carburant depuis ledit réservoir de carburant (102) est entraîné par une pompe de suralimentation (104) vers ladite pompe à carburant principale (110) et ladite pompe électrique (116).

8. Moteur à turbine à gaz (10) ou procédé selon l'une quelconque des revendications 2 à 7, dans lequel du carburant n'est pas fourni audit augmentateur (20) pendant un fonctionnement à demande plus faible.

9. Système d'alimentation en carburant (100), moteur à turbine à gaz (10) ou procédé selon une quelconque revendication précédente, dans lequel ladite soupape de répartition (114) fournit du carburant uniquement depuis ladite pompe électrique (116) lors d'un fonctionnement à demande plus faible.

10. Système d'alimentation en carburant (100), moteur à turbine à gaz (10) ou procédé selon une quelconque revendication précédente, dans lequel une soupape (108) bloque sélectivement l'écoulement de carburant vers ladite pompe à carburant principale (110) pendant ledit fonctionnement à demande plus faible.
